# FASCICULE DE BREVET EUROPEEN

(11) **EP 2 855 352 B1**
(45) Date de publication et mention de la délivrance du brevet: **22.12.2021**
(21) Numéro de dépôt: 13731366.4
(22) Date de dépôt: 28.05.2013
(51) Int. Cl.: C01B 17/02, C09K 5/12

(54) **SOUFRE LIQUIDE DE FAIBLE VISCOSITÉ**
NIEDRIGVISKOSER FLÜSSIGER SCHWEFEL
LOW-VISCOSITY LIQUID SULPHUR

(30) Priorité: 01.06.2012 FR 1255140
(43) Date de publication de la demande: 08.04.2015
(73) Titulaire: Arkema France, 92700 Colombes (FR)
(72) Inventeur: SCHMITT, Paul Guillaume, F-64230 Lescar (FR)
(74) Mandataire: Arkema Patent
(86) Numéro de dépôt international: PCT/FR2013/051180
(87) Numéro de publication internationale: WO 2013/178930

(56) Documents cités:
- WO-A1-2011/131610
- DE-A1- 2 725 670
- US-A1- 2011 259 552
- None

## Description

La présente invention concerne le domaine du soufre, et en particulier celui du soufre liquide, c'est-à-dire à l'état fondu. Plus particulièrement l'invention concerne un additif permettant de réduire la viscosité du soufre à l'état fondu, et les compositions de faible viscosité à base de soufre liquide comprenant un tel additif, ainsi que l'utilisation desdites compositions.

Le soufre est aujourd'hui très largement et couramment utilisé dans de très nombreux domaines de l'industrie, notamment de l'industrie chimique en tant que réactif de synthèse pour la préparation de divers composés chimiques, tels que par exemple, et à titre non limitatif acide sulfurique (H₂SO₄), anhydride sulfureux (SO₂), oléums (S0₃), disulfure de carbone (CS₂), sulfites ou sulfates pour l'industrie papetière, pentasulfure de phosphore comme agent de lubrification, mais aussi en tant que tel (soufre) pour la vulcanisation des pneus, soufre formulé en agriculture, polymères de soufre pour les ciments et bétons, ainsi que soufre en tant que fluide de transfert ou de stockage de chaleur, notamment pour centrales électriques (thermiques ou nucléaires), pour panneaux solaires (cf. par exemple US 2011/0259552), et autres.

Le soufre, n° atomique 16 dans la classification périodique des éléments de Mendeleïev, est un solide à température ambiante, liquide à partir de 115°C (point de fusion) jusqu'à 444°C, température à laquelle il devient gazeux (point d'ébullition).

Dans la plupart des applications industrielles citées précédemment, il est très souvent nécessaire de stocker, transporter, utiliser ou encore faire réagir le soufre à l'état liquide. Or, un des inconvénients majeurs du soufre liquide est que, lorsque la température augmente, sa viscosité augmente considérablement pour atteindre un maximum vers 180°C ― 200°C, puis diminue à nouveau progressivement vers les plus hautes températures (400°C).

Plus précisément, la viscosité du soufre est inférieure à 10 mPa.s vers 130°C, augmente brutalement à partir de 150°C ― 160°C atteint environ 100000 mPa.s vers 200°C, pour redescendre vers quelques dizaines de mPa.s à des températures de 300°C et au-delà.

Cette viscosité très importante du soufre, notamment entre environ 150°C et environ 300°C, pose des problèmes majeurs à tous les niveaux des procédés industriels qui mettent en œuvre cet élément liquide, ne serait-ce qu'au niveau des unités réactionnelles, mais aussi au niveau logistique, pour le stockage, le transport et le transfert du soufre dans les différentes lignes d'approvisionnement, conduites, tubulures, vannes, pompes, et autres éléments dans lesquels le soufre doit circuler.

Outre cette importante viscosité, aux températures précitées, un autre inconvénient du soufre liquide est que sa viscosité varie grandement et de manière non linéaire en fonction de la température. Il est donc nécessaire de contrôler finement la température du soufre liquide afin d'éviter des grandes variations de viscosité, notamment dans la gamme de température allant de 150°C à 300°C, et ne pas perturber les installations industrielles mettant en œuvre du soufre liquide.

Pour palier ces inconvénients liés à la viscosité, il n'existe dans l'art antérieur que peu de solutions. Celle qui semble la plus adaptée a été présenté par Rocco Fanelli (« Industrial and Engineering Chemistry », vol. 38(1), janvier 1946, pages 39-43) qui propose l'ajout d'halogènes, de sulfure d'hydrogène sulfuré ou de persulfure d'hydrogène, dans le soufre liquide pour obtenir une viscosité constante à des températures supérieures à 160°C.

Beaucoup plus récemment, la demande de brevet US 2011/0259552 indique également que l'ajout de sulfure d'hydrogène permet de diminuer significativement la viscosité du soufre liquide. Il est en outre indiqué dans ce document que l'H₂S peut-être généré *in situ* par exemple par NaHS.

Ainsi, depuis 1946 jusqu'à aujourd'hui, il ne paraît pas exister d'alternative à l'ajout d'hydrogène sulfuré dans le soufre liquide pour en diminuer sa viscosité. Or, les dangers liés à l'utilisation du sulfure d'hydrogène sont bien connus, et il serait tout à fait intéressant de pouvoir éviter l'utilisation de ce gaz très toxique. En outre, les sulfanes tels que décrits à la colonne 1 page 2 de la demande US 2011/0259552 sont connus pour être instables et libérer du sulfure d'hydrogène H₂S.

La demande WO2011/131610 divulgue un fluide de transfert de chaleur comprenant du soufre et au moins un dérivé organo-halogéné qui permet de réduire la viscosité du soufre porté à une température de 120°C à 400°C. Ce dérivé halogéné peut être utilisé seul ou en mélange avec d'autres additifs, par exemple des polysulfures de formule R₁SₓR₂, où x prend les valeurs 2 à 8, et R₁ et R₂ sont des résidus d'alkyle comportant de 2 à 18 atomes de carbone et en particulier de 9 à 12 atomes de carbone. La solution apportée par cette demande au problème de la viscosité du soufre liquide met obligatoirement en œuvre un ou plusieurs composés halogénés qui sont souvent toxiques et peuvent générer des problèmes de corrosion importants des installations, en particulier aux températures considérées.

Ainsi, un premier objectif de la présente invention consiste à proposer un moyen simple et efficace pour maintenir le soufre liquide à une viscosité convenable pour les utilisations auxquelles il est destiné, voire permettant d'obtenir une viscosité du soufre liquide au moins égale ou mieux encore inférieure à celle observée, à température équivalente, pour du soufre liquide additionné de sulfure d'hydrogène.

Selon un autre objectif, la présente invention consiste à proposer un additif permettant de maintenir la viscosité du soufre liquide à des valeurs inférieures à 60000 mPa.s, de préférence inférieures à 30000 mPa.s, de préférence encore inférieures à 10000 mPa.s, ou encore inférieures à 5000 mPa.s, ledit additif ne présentant pas les inconvénients liés à la toxicité, aux risques de corrosion, aux difficultés de manipulation et autres, rencontrés avec les additifs connus de l'art antérieur.

Préférentiellement, et selon encore un autre objectif, la présente invention consiste à proposer un additif permettant de maintenir la viscosité du soufre liquide à des valeurs inférieures à 5000 mPa.s, de préférence inférieures à 3000 mPa.s, de préférence encore inférieures à 2000 mPa.s, ou encore inférieures à 1000 mPa.s, voire inférieures à 500 mPa.s, ledit additif ne présentant pas les inconvénients liés à la toxicité, aux risques de corrosion, aux difficultés de manipulation et autres, rencontrés avec les additifs connus de l'art antérieur.

Les objectifs précités, ainsi que d'autres qui apparaîtront dans la suite, sont maintenant atteints en totalité, ou au moins en partie, grâce à la présente invention, dont la description détaillée suit.

Les inventeurs ont maintenant découvert que l'ajout d'au moins un monosulfure, disulfure et/ou polysulfure de dialkyle, en faible quantité dans le soufre liquide permet d'en diminuer la viscosité, dans les limites indiquées plus haut.

Plus précisément, l'invention concerne tout d'abord l'utilisation d'au moins composé de formule générale (1) :

R-Sn-R' (1)

dans laquelle :
- R et R', identiques ou différents, représentent, indépendamment l'un de l'autre, un radical hydrocarboné, linéaire ou ramifié, contenant de 1 à 12 atomes de carbone et éventuellement une ou plusieurs insaturations sous forme de double(s) et/ou triple(s) liaison(s) ;
- n représente un entier compris entre 1 et 8, bornes incluses, de préférence entre 1 et 6, bornes incluses, de préférence encore entre 1 et 4, bornes incluses, plus préférentiellement entre 2 et 8, bornes incluses, mieux encore entre 2 et 6, et tout particulièrement entre 2 et 4, bornes incluses ;
pour maintenir la viscosité du soufre liquide à une valeur inférieure à 60000 mPa.s, de préférence inférieure à 30000 mPa.s, de préférence encore inférieure à 10000 mPa.s, avantageusement inférieure à 5000 mPa.s,
ledit au moins un composé de formule générale (1) étant utilisé sans addition de composé organo-halogéné.

Selon un mode de réalisation préféré, la présente invention concerne l'utilisation d'au moins composé de formule générale (1) tel que défini précédemment pour maintenir la viscosité du soufre liquide à une valeur inférieure à 5000 mPa.s, de préférence inférieure à 3000 mPa.s, de préférence encore inférieure à 2000 mPa.s, ou encore inférieure à 1000 mPa.s, voire inférieure à 500 mPa.s.

Pour les besoins de l'invention, on préfère, selon un premier mode de réalisation, les composés de formule (1) pour lesquels R et R' représentent chacun indépendamment l'un de l'autre un radical hydrocarboné saturé (radical alkyle) contenant de 1 à 12 atomes de carbone, de préférence de 1 à 6 atomes de carbone, de préférence encore de 1 à 4 atomes de carbone.

Selon un autre mode de réalisation de la présente invention, on préfère les composés de formule (1) dans lesquels les radicaux hydrocarbonés R et R' sont identiques.

Selon encore un autre mode de réalisation, les composés de la présente invention sont choisis parmi ceux pour lesquels R et R' représentent chacun indépendamment l'un de l'autre un radical hydrocarboné saturé (radical alkyle) contenant de 1 à 6 atomes de carbone, de préférence de 1 à 4 atomes de carbone, et n représente un entier compris entre 2 et 8, de préférence entre 2 et 6, bornes incluses, de préférence encore n représente 2, 3 ou 4, plus préférentiellement n est égal à 2. De préférence encore, les radicaux R et R' sont identiques. Il a été observé une réduction très significative de la viscosité du soufre liquide avec les composés de formule (1) dans lesquels n supérieur ou égal à 2, notamment compris entre 2 et 8.

Les radicaux alkyle R et R' préférés sont ainsi choisis parmi méthyle, éthyle, propyle, butyle, pentyle, et hexyle, sous forme linéaire ou ramifiée.

Parmi les composés de formule (1), on préfère tout particulièrement le sulfure de diméthyle (ou méthyldisulfure ou DMS), le sulfure de diéthyle (ou diéthylsulfure ou DES), le sulfure de dipropyle (ou dipropylsulfure ou DPS), le sulfure de dibutyle (ou dibutylsulfure ou DBS), le disulfure de diméthyle (ou diméthyldisulfure ou DMDS), le disulfure de diéthyle (ou diéthyldisulfure ou DEDS), le disulfure de dipropyle (ou dipropyldisulfure ou DPDS), le disulfure de dibutyle (ou dibutyldisulfure ou DBDS), leurs homologues trisulfures, leurs homologues tétrasulfures, leurs homologues pentasulfures, leurs homologues hexasulfures, seuls ou en mélanges de deux ou plusieurs d'entre eux en toutes proportions, étant entendu que les radicaux propyle et butyle peuvent se présenter sous forme linéaire ou ramifiée, par exemple, n-propyle, iso-propyle, n-butyle, iso-butyle, sec-butyle et tert-butyle.

Selon un aspect tout à fait préféré, la présente invention concerne l'utilisation précitée dans laquelle le composé de formule (1) est choisi parmi le DMDS, le DEDS, le DPDS, le DBDS, ainsi que les mélanges de deux ou plusieurs d'entre eux en toutes proportions.

Les composés de formule (1) sont bien connus de l'homme du métier et sont soit disponibles dans le commerce, soit facilement préparés à partir de modes opératoires connus et disponibles dans la littérature scientifique, la littérature brevet, les Chemical Abstracts ou sur l'Internet.

Dans le cas particulier des disulfures de dialkyle, ceux-ci peuvent être par exemple sous forme de mélanges dénommés DSO (pour « DiSulphide Oils » en langue anglaise) et qui sont les produits d'oxydation de mercaptans, notamment ainsi traités sur les champs d'extraction de gaz.

Selon un aspect tout particulièrement préféré de la présente invention, le composé de formule (1) est le DMDS qui a montré des résultats tout à fait satisfaisants vis-à-vis de la viscosité du soufre fondu, et qui présente en outre l'avantage d'être un liquide facilement manipulable et aux propriétés toxicologiques beaucoup plus favorables que l'H₂S.

Contrairement à l'enseignement de l'art antérieur (diminution de la viscosité du soufre liquide par H₂S ou un générateur d'H₂S), les composés de formule (1), en particulier les disulfures de dialkyle et notamment le DMDS, ne génèrent pas d'H₂S à des températures inférieures à 350-400°C. Sans vouloir être lié par la théorie, il est donc possible de penser qu'avec ces composés de formule (1), ce sont les radicaux R-S (ou R'-S, R et R' étant tels que définis précédemment) et non les radicaux SH (comme dans le cas du H₂S) qui empêchent l'apparition du pic de viscosité du soufre liquide dans le domaine de température 170°C ― 220°C.

La quantité d'au moins un composé de formule (1) nécessaire pour permettre d'abaisser la viscosité du soufre liquide, notamment dans la gamme de température 170°C ― 220°C peut varier dans de grandes proportions, mais est généralement relativement faible, et à titre d'exemple peut être comprise entre 0,0001 mole et 1 mole d'au moins un composé de formule (1) pour 100 moles de soufre, de préférence entre 0,001 mole et 1 mole d'au moins un composé de formule (1) pour 100 moles de soufre, de préférence encore entre 0,001 mole et 0,5 mole d'au moins un composé de formule (1) pour 100 moles de soufre.

Lorsque le composé de formule (1) est le DMDS, la quantité de DMDS dans le soufre liquide peut par exemple être comprise entre 0,001% en poids à 1% en poids, de préférence entre 0,001% en poids et 0,5% en poids par rapport à la quantité de soufre.

Selon un mode de réalisation préféré, ledit au moins un composé de formule (1) décrit précédemment utilisé pour diminuer la viscosité du soufre liquide, ne comprend pas d'autres additifs, et en particulier ne comprend pas d'autres additifs toxiques ou nocifs pour les êtres vivants et pour l'environnement ou encore susceptibles de modifier ou d'altérer les propriétés du soufre liquide ainsi additivé.

Selon l'invention, ledit au moins un composé de formule (1) est utilisé sans addition de composé organo-halogéné. Comme indiqué précédemment, les composés organo-halogénés peuvent être responsables de la corrosion des diverses installations dans lesquelles circule le soufre liquide, sans compter le fait que de tels composés halogénés sont connus pour être toxiques tant pour les êtres vivants que pour l'environnement.

Selon un autre aspect, la présente invention concerne le procédé de préparation de soufre liquide, ledit procédé comprenant au moins une étape d'introduction, dans le soufre à l'état solide ou à l'état fondu, d'une quantité efficace d'au moins un composé de formule (1) tel que défini précédemment, ledit au moins un composé de formule (1) étant utilisé sans addition de composé organo-halogéné.

Par quantité efficace, on entend une quantité comprise entre 0,0001 mole et 1 mole d'au moins un composé de formule (1) pour 100 moles de soufre, de préférence entre 0,001 mole et 1 mole d'au moins un composé de formule (1) pour 100 moles de soufre, de préférence encore entre 0,001 mole et 0,5 mole d'au moins un composé de formule (1) pour 100 moles de soufre.

Le ou les composé(s) de formule (1) peu(ven)t être introduit(s) à l'état solide, liquide voire gazeux, selon la nature du ou des composé(s) de formule (1), et selon la méthode d'administration dans les soufre solide ou liquide.

On peut par exemple introduire le(s) composé(s) de formule (1) à l'état liquide, par mélange avec le soufre, par introduction à l'aide d'une buse, d'un pulvérisateur, directement dans le réacteur de fusion du soufre, ou encore dans une conduite de transport de soufre liquide, et toute autre méthode d'introduction d'un additif solide, liquide ou gazeux, dans un solide ou un liquide, connue de l'homme du métier.

Selon encore un autre aspect, la présente invention concerne une composition de soufre liquide, à une température comprise entre 115°C et 440°C, et comprenant au moins un composé de formule (1) tel que défini précédemment, dans les proportions telles qu'indiquées précédemment, ladite composition ne comprenant pas de composé organo-halogéné.

La composition selon la présente invention présente ainsi une viscosité faible, inférieure à la viscosité du soufre pur à la même température, et notamment une viscosité inférieure à 60000 mPa.s, dé préférence inférieure à 30000 mPa.s, de préférence encore inférieure à 10000 mPa.s, avantageusement inférieure à 5000 mPa.s.

En outre, il a été découvert de manière surprenante que l'utilisation d'au moins un composé de formule (1) permet de réduire de manière tout à fait satisfaisante la viscosité du soufre liquide, sans qu'il soit nécessaire d'ajouter un autre additif, notamment un additif organo-halogéné. Ainsi, la composition de la présente invention définie ci-dessus ne comporte pas de composé organo-halogéné, notamment pour les raisons évoquées précédemment.

La composition selon la présente invention trouve ainsi une utilisation tout à fait intéressante dans de nombreux domaines industriels, tels que par exemple, et à titre non limitatif, en tant que réactif de synthèse pour la préparation de composés chimiques, mais aussi en tant que tel (soufre) pour la vulcanisation des pneus, pour la préparation de soufre formulé en agriculture, de soufre pour les ciments et bétons, ainsi que soufre en tant que fluide de transfert ou de stockage de chaleur, notamment pour centrales électriques ou pour panneaux solaires, et autres, pour ne citer que les principales utilisations de soufre liquide connues de l'homme du métier.

Les exemples suivants servent à illustrer l'invention sans toutefois apporter une quelconque limitation aux modes de réalisation présentés ci-dessus.

### Exemple 1: Test avec le sulfure de diéthyle (DES)

Le mode opératoire suivant est réalisé :
- du soufre solide (25 g) préalablement broyé est placé dans une chambre de mesure jetable en aluminium,
- on place la quantité de DES souhaité dans le fond de la chambre jetable et on recouvre de 25g de soufre,
- la chambre de mesure est placée dans le four d'un viscosimètre de marque Brookfield, modèle LV-DVIII+,
- on fixe la température souhaitée (entre 115°C et 250°C) sur le programmateur qui pilote le four,
- le soufre se liquéfie à partir de 115°C, 8,5 g de soufre sont alors ajoutés à l'aide d'un entonnoir métallique de manière à amener la quantité totale de soufre dans la chambre de mesure à 33,5 g,
- lorsque la totalité du soufre est à l'état liquide, le mobile du viscosimètre est plongé jusqu'au repère de la tige du mobile,
- on place alors le couvercle du four sur l'orifice de la chambre de mesure, et on fixe les paramètres sur le viscosimètre LV-DVIII+ : sélection du mobile et sélection de la vitesse de rotation du mobile souhaitée,
- on démarre alors l'analyse et on recueille les résultats.

Les viscosités obtenues à 195°C sont les suivantes :

| | |
|---|---|
| Soufre seul : | 98667 mPa.s |
| Soufre + 0,1% en poids de DES : | 57000 mPa.s |

L'addition, dans le soufre, d'une faible quantité en poids d'un monosulfure de dialkyle, tel que le DES, permet d'obtenir une diminution très significative de la viscosité du soufre liquide à 195°C.

### Exemple 2: Test avec le disulfure de diméthyle (DMDS)

Le même mode opératoire que celui de l'exemple 1 est réalisé en remplaçant le DES par du DMDS.

Les viscosités obtenues à 195°C sont les suivantes :

| | |
|---|---|
| Soufre seul : | 98667 mPa.s |
| Soufre + 0,1% en poids de DMDS : | < 1000 mPa.s |

L'addition, dans le soufre, d'une faible quantité en poids d'un disulfure de dialkyle, tel que le DMDS, permet ainsi de réduire de manière considérable la viscosité du soufre liquide, à 195°C.

## Revendications

1. Utilisation d'au moins un composé de formule générale (1) :
R-Sn-R' (1)
dans laquelle :
• R et R', identiques ou différents, représentent, indépendamment l'un de l'autre, un radical hydrocarboné, linéaire ou ramifié, contenant de 1 à 12 atomes de carbone et éventuellement une ou plusieurs insaturations sous forme de double(s) et/ou triple(s) liaison(s) ;
• n représente un entier compris entre 1 et 8, bornes incluses, de préférence entre 1 et 6, bornes incluses, de préférence encore entre 1 et 4, bornes incluses, plus préférentiellement entre 2 et 8, bornes incluses, mieux encore entre 2 et 6, et tout particulièrement entre 2 et 4, bornes incluses ;
pour maintenir la viscosité du soufre liquide à une valeur inférieure à 60000 mPa.s, de préférence inférieure à 30000 mPa.s, de préférence encore inférieure à 10000 mPa.s, avantageusement inférieure à 5000 mPa.s,
ledit au moins un composé de formule (1) étant utilisé sans addition de composé organo-halogéné.

2. Utilisation selon la revendication 1, pour maintenir la viscosité du soufre liquide à des valeurs inférieures à 5000 mPa.s, de préférence inférieures à 3000 mPa.s, de préférence encore inférieures à 2000 mPa.s, ou encore inférieures à 1000 mPa.s, voire inférieures à 500 mPa.s.

3. Utilisation selon la revendication 1 ou la revendication 2, dans laquelle les composés de formule (1) sont choisis parmi ceux pour lesquels R et R' représentent chacun indépendamment l'un de l'autre un radical hydrocarboné saturé (radical alkyle) contenant de 1 à 12 atomes de carbone, de préférence de 1 à 6 atomes de carbone, de préférence encore de 1 à 4 atomes de carbone.

4. Utilisation selon l'une quelconque des revendications précédentes, dans laquelle les radicaux hydrocarbonés R et R' des composés de formule (1) sont identiques.

5. Utilisation selon l'une quelconque des revendications précédentes, dans laquelle les composés de formule (1) sont choisis parmi ceux pour lesquels R et R', de préférence identiques, représentent chacun indépendamment l'un de l'autre, un radical alkyle contenant de 1 à 6 atomes de carbone, de préférence de 1 à 4 atomes de carbone, et n représente un entier compris entre 2 et 6, bornes incluses.

6. Utilisation selon l'une quelconque des revendications 1 à 3, dans laquelle le composé de formule (1) est choisi parmi le sulfure de diméthyle, le sulfure de diéthyle, le sulfure de dipropyle, le sulfure de dibutyle, le disulfure de diméthyle, le disulfure de diéthyle, le disulfure de dipropyle, le disulfure de dibutyle, leurs homologues trisulfures, leurs homologues tétrasulfures, leurs homologues pentasulfures, leurs homologues hexasulfures, seuls ou en mélanges de deux ou plusieurs d'entre eux en toutes proportions.

7. Utilisation selon l'une quelconque des revendications précédentes, dans laquelle le composé de formule (1) est choisi parmi le DMDS, le DEDS, le DPDS, le DBDS, ainsi que les mélanges de deux ou plusieurs d'entre eux en toutes proportions.

8. Utilisation selon l'une quelconque des revendications précédentes, dans laquelle la quantité d'au moins un composé de formule (1) est comprise entre 0,0001 mole et 1 mole pour 100 moles de soufre, de préférence entre 0,001 mole et 1 mole pour 100 moles de soufre, de préférence encore entre 0,001 mole et 0,5 mole pour 100 moles de soufre.

9. Procédé de préparation de soufre liquide, comprenant au moins une étape d'introduction, dans le soufre à l'état solide ou à l'état fondu, d'une quantité d'au moins un composé de formule (1) tel que défini dans l'une quelconque des revendications 1 à 7, comprise entre 0,0001 mole et 1 mole pour 100 moles de soufre, de préférence entre 0,001 mole et 1 mole pour 100 moles de soufre, de préférence encore entre 0,001 mole et 0,5 mole pour 100 moles de soufre, ledit au moins un composé de formule (1) étant utilisé sans addition de composé organo-halogéné.

10. Composition de soufre liquide, à une température comprise entre 115°C et 440°C, et comprenant au moins un composé de formule (1) tel que défini dans l'une quelconque des revendications 1 à 7, en une quantité comprise entre 0,0001 mole et 1 mole pour 100 moles de soufre, de préférence entre 0,001 mole et 1 mole pour 100 moles de soufre, de préférence encore entre 0,001 mole et 0,5 mole pour 100 moles de soufre, ladite composition ne comprenant pas de composé organo-halogéné.

11. Utilisation de la composition de soufre liquide selon la revendication 10, en tant que réactif de synthèse pour la préparation de composés chimiques, mais aussi en tant que tel (soufre) pour la vulcanisation des pneus, pour la préparation de soufre formulé en agriculture, de soufre pour les ciments et bétons, ainsi que soufre en tant que fluide de transfert ou de stockage de chaleur, pour centrales électriques ou pour panneaux solaires.

## Patentansprüche

1. Verwendung mindestens einer Verbindung der allgemeinen Formel (1):
R-Sₙ-R' (1),
in der:
• R und R', die gleich oder verschieden sind, unabhängig voneinander für einen linearen oder verzweigten Kohlenwasserstoffrest mit 1 bis 12 Kohlenstoffatomen und gegebenenfalls einer oder mehreren Ungesättigtheiten in Form einer oder mehrerer Doppel- und/oder Dreifachbindungen;
• n für eine ganze Zahl zwischen 1 und 8 einschließlich der Grenzen, bevorzugt zwischen 1 und 6 einschließlich der Grenzen, weiter bevorzugt zwischen 1 und 4 einschließlich der Grenzen, weiter bevorzugt zwischen 2 und 8 einschließlich der Grenzen, noch besser zwischen 2 und 6 und ganz besonders zwischen 2 und 4 einschließlich der Grenzen steht;
zum Halten der Viskosität von flüssigem Schwefel bei einem Wert unter 60.000 mPa.s, bevorzugt unter 30.000 mPa.s, weiter bevorzugt unter 10.000 mPa.s, vorteilhafterweise unter 5000 mPa.s,
wobei die mindestens eine Verbindung der Formel (1) ohne Zugabe von Organohalogenverbindung verwendet wird.

2. Verwendung nach Anspruch 1 zum Halten der Viskosität von flüssigem Schwefel bei Werten unter 5000 mPa.s, bevorzugt unter 3000 mPa.s, weiter bevorzugt unter 2000 mPa.s oder auch unter 1000 mPa.s oder sogar unter 500 mPa.s.

3. Verwendung nach Anspruch 1 oder Anspruch 2, wobei die Verbindungen der Formel (1) aus denjenigen ausgewählt sind, für die R und R' jeweils unabhängig voneinander für einen gesättigten Kohlenwasserstoffrest (Alkylrest) mit 1 bis 12 Kohlenstoffatomen, bevorzugt 1 bis 6 Kohlenstoffatomen, weiter bevorzugt 1 bis 4 Kohlenstoffatomen, stehen.

4. Verwendung nach einem der vorhergehenden Ansprüche, wobei die Kohlenwasserstoffreste R und R' der Verbindungen der Formel (1) identisch sind.

5. Verwendung nach einem der vorhergehenden Ansprüche, wobei die Verbindungen der Formel (1) aus denjenigen ausgewählt sind, für die R und R', die bevorzugt identisch sind, jeweils unabhängig voneinander für einen Alkylrest mit 1 bis 6 Kohlenstoffatomen, bevorzugt 1 bis 4 Kohlenstoffatomen, stehen und n für eine ganze Zahl zwischen 2 und 6 einschließlich der Grenzen steht.

6. Verwendung nach einem der Ansprüche 1 bis 3, wobei die Verbindung der Formel (1) aus Dimethylsulfid, Diethylsulfid, Dipropylsulfid, Dibutylsulfid, Dimethyldisulfid, Diethyldisulfid, Dipropyldisulfid, Dibutyldisulfid, den Trisulfid-Homologen davon, den Tetrasulfid-Homologen davon, den Pentasulfid-Homologen davon und den Hexasulfid-Homologen davon alleine oder als Mischungen von zwei oder mehr davon in allen Anteilen ausgewählt ist.

7. Verwendung nach einem der vorhergehenden Ansprüche, wobei die Verbindung der Formel (1) aus DMDS, DEDS, DPDS und DBDS sowie Mischungen von zwei oder mehr davon in allen Anteilen ausgewählt ist.

8. Verwendung nach einem der vorhergehenden Ansprüche, wobei die Menge mindestens einer Verbindung der Formel (1) zwischen 0,0001 mol und 1 mol pro 100 mol Schwefel, bevorzugt zwischen 0,001 mol und 1 mol pro 100 mol Schwefel, weiter bevorzugt zwischen 0,001 mol und 0,5 mol pro 100 mol Schwefel, liegt.

9. Verfahren zur Herstellung von flüssigem Schwefel, umfassend mindestens einen Schritt des Eintragens einer Menge mindestens einer Verbindung der Formel (1) gemäß einem der Ansprüche 1 bis 7 zwischen 0,0001 mol und 1 mol pro 100 mol Schwefel, bevorzugt zwischen 0,001 mol und 1 mol pro 100 mol Schwefel, weiter bevorzugt zwischen 0,001 mol und 0,5 mol pro 100 mol Schwefel, in den Schwefel in fester Form oder in schmelzflüssiger Form, wobei die mindestens eine Verbindung der Formel (1) ohne Zugabe von Organohalogenverbindung verwendet wird.

10. Schwefelzusammensetzung, die bei einer Temperatur zwischen 115 °C und 440 °C flüssig ist und mindestens eine Verbindung der Formel (1) gemäß einem der Ansprüche 1 bis 7 in einer Menge zwischen 0,0001 mol und 1 mol pro 100 mol Schwefel, bevorzugt zwischen 0,001 mol und 1 mol pro 100 mol Schwefel, weiter bevorzugt zwischen 0,001 mol und 0,5 mol pro 100 mol Schwefel, umfasst, wobei die Zusammensetzung keine Organohalogenverbindung umfasst.

11. Verwendung der flüssigen Schwefelzusammensetzung nach Anspruch 10 als Synthesereagenz zur Herstellung chemischer Verbindungen, aber auch als solcher (Schwefel) zur Vulkanisation von Reifen, zur Herstellung von formuliertem Schwefel in der Landwirtschaft, von Schwefel für Zemente und Betone so wie Schwefel als Wärmeübertragungs- oder Wärmespeicherungsfluid für Elektrizitätswerke oder für Solarpanels.

## Claims

1. Use of at least one compound of general formula (1) :
R-Sₙ-R' (1)
in which:
• R and R', which may be identical or different, represent, independently of each other, a linear or branched hydrocarbon-based radical, containing from 1 to 12 carbon atoms and optionally one or more unsaturations in the form of double and/or triple bonds;
• n represents an integer between 1 and 8, limits inclusive, preferably between 1 and 6, limits inclusive, more preferably between 1 and 4, limits inclusive, more preferentially between 2 and 8, limits inclusive, better still between 2 and 6, and most particularly between 2 and 4, limits inclusive;
for maintaining the viscosity of liquid sulfur at a value below 60 000 mPa.s, preferably below 30 000 mPa.s, more preferably below 10 000 mPa.s and advantageously below 5000 mPa.s,
said at least one compound of formula (1) being used without addition of organohalogen compound.

2. Use according to Claim 1, for maintaining the viscosity of liquid sulfur at values below 5000 mPa.s, preferably below 3000 mPa.s, more preferably below 2000 mPa.s, or even below 1000 mPa.s, or even below 500 mPa.s.

3. Use according to Claim 1 or Claim 2, in which the compounds of formula (1) are chosen from those for which R and R' represent, independently of each other, a saturated hydrocarbon-based radical (alkyl radical) containing from 1 to 12 carbon atoms, preferably from 1 to 6 carbon atoms and more preferably from 1 to 4 carbon atoms.

4. Use according to any one of the preceding claims, in which the hydrocarbon-based radicals R and R' of the compounds of formula (1) are identical.

5. Use according to any one of the preceding claims, in which the compounds of formula (1) are chosen from those for which R and R', which are preferably identical, represent, independently of each other, an alkyl radical containing from 1 to 6 carbon atoms and preferably from 1 to 4 carbon atoms, and n represents an integer between 2 and 6, limits inclusive.

6. Use according to any one of Claims 1 to 3, in which the compound of formula (1) is chosen from dimethyl sulfide, diethyl sulfide, dipropyl sulfide, dibutyl sulfide, dimethyl disulfide, diethyl disulfide, dipropyl disulfide and dibutyl disulfide, the trisulfide homologs thereof, the tetrasulfide homologs thereof, the pentasulfide homologs thereof and the hexasulfide homologs thereof, alone or as mixtures of two or more thereof in all proportions.

7. Use according to any one of the preceding claims, in which the compound of formula (1) is chosen from DMDS, DEDS, DPDS and DBDS, and also mixtures of two or more thereof in all proportions.

8. Use according to any one of the preceding claims, in which the amount of at least one compound of formula (1) is between 0.0001 mol and 1 mol per 100 mol of sulfur, preferably between 0.001 mol and 1 mol per 100 mol of sulfur and more preferably between 0.001 mol and 0.5 mol per 100 mol of sulfur.

9. Process for preparing liquid sulfur, comprising at least one step of introducing, into sulfur in solid form or in molten form, an amount of at least one compound of formula (1) as defined in any one of Claims 1 to 7, of between 0.0001 mol and 1 mol per 100 mol of sulfur, preferably between 0.001 mol and 1 mol per 100 mol of sulfur and more preferably between 0.001 mol and 0.5 mol per 100 mol of sulfur, said at least one compound of formula (1) being used without addition of organohalogen compound.

10. Liquid sulfur composition, at a temperature of between 115°C and 440°C, and comprising at least one compound of formula (1) as defined in any one of Claims 1 to 7, in an amount of between 0.0001 mol and 1 mol per 100 mol of sulfur, preferably between 0.001 mol and 1 mol per 100 mol of sulfur and more preferably between 0.001 mol and 0.5 mol per 100 mol of sulfur, said composition not comprising any organohalogen compound.

11. Use of the liquid sulfur composition according to Claim 10, as a synthetic reagent for the preparation of chemical compounds, but also in unmodified form (sulfur) for the vulcanization of tires, for the preparation of formulated sulfur in agriculture, of sulfur for cements and concretes, and also sulfur as a heat-transfer or heat-storage fluid, for power stations or for solar panels.
